## Europäisches Patentamt
## European Patent Office
## Office européen des brevets

(19)

(11) Veröffentlichungsnummer: **0 222 025 B1**

(12) **EUROPÄISCHE PATENTSCHRIFT**

(45) Veröffentlichungstag der Patentschrift: **27.03.91**

(51) Int. Cl.5: **H04N 5/45**

(21) Anmeldenummer: **85112824.9**

(22) Anmeldetag: **10.10.85**

(54) **Fernsehempfänger mit Mehrfach-Bildwiedergabe.**

(43) Veröffentlichungstag der Anmeldung:
**20.05.87 Patentblatt 87/21**

(45) Bekanntmachung des Hinweises auf die
Patenterteilung:
**27.03.91 Patentblatt 91/13**

(84) Benannte Vertragsstaaten:
**DE FR GB IT NL**

(56) Entgegenhaltungen:
**US-A- 4 267 560**
**US-A- 4 278 993**

(73) Patentinhaber: **Deutsche ITT Industries GmbH**
**Hans-Bunte-Strasse 19 Postfach 840**
**W-7800 Freiburg i.Br.(DE)**

(72) Erfinder: **Micic, Ljubomir, Dipl.-Ing.**
**Sundgauallee 15**
**W-7800 Freiburg i.Br.(DE)**
Erfinder: **Mehrgardt, Sönke, Dr. rer. nat.**
**Häglestrasse 26**
**W-7801 March-Neuershausen(DE)**

**Beschreibung**

Die Erfindung betrifft einen Fernsehempfänger mit Mehrfach-Bildwiedergabe, auf dessen Bildschirm ein einziges Videosignal gleichzeitig in mehreren Teilbereichen oder unterschiedliche Videosignale jeweils in einem zugeordneten Teilbereich wiederzugeben sind, wobei in jeweils einem Teilbereich als Videosignal entweder ein verkleinertes Bild oder ein Ausschnitt des von einer Videosignalquelle gelieferten Bildes darzustellen ist, mit einer digitalen Signalverarbeitungsschaltung, die die Signale der Videosignalquellen in Bilddaten umwandelt, die für jeden Bildpunkt aus Helligkeits- und Farbdaten bestehen, mit einem Random-Access-Speicher(= RAM), der die Bilddaten des ganzen Bildschirms enthält, mit einer Steuereinheit, die das Laden der Bilddaten in einen Speichersektor des RAMs in Abhängigkeit von der Anzahl der wiederzugebenden Videosignale und das zeilenweise Auslesen steuert, wobei jeweils nur ausgewählte Bildzeilen der Videosignalquellen in den zugeordneten Speichersektor gelangen, und mit einem die analogen Rot-, Grün- und Blau-Signale erzeugenden Digital-Analog-Wandler, dem die ausgelesenen Bilddaten zugeführt sind, vgl. den Oberbegriff des Anspruchs 1.

Ein derartiger Fernsehempfänger ist in der Firmendruckschrift "VMC Video Memory Controller", Intermetall Semiconductors ITT, August 1985 beschrieben.

Bei der vorbeschriebenen Fernsehempfängerschaltung handelt es sich um eine Schaltung, welche Random-Axcess-Speicher, im folgenden als RAMs bezeichnet, verwendet. Für die Mehrfach-Bildwiedergabe ist der Bildschirm in bis zu neun gleichgroße Bereiche aufgeteilt, die jeweils einen Ausschnitt eines Bildes von normaler Größe, oder ein vollständiges, aber verkleinertes Bild enthalten.

Mit dieser Betriebsart können nacheinander erzeugte "Schnappschüsse" von bis zu neun verschiedenen Videosignalen gleichzeitig dargestellt werden. Die Umschaltung der Videosignale erfolgt manuell oder über den zentralen Mikroprozessor des Fernsehwiedergabe systems.

In der Offenlegungsschrift DE-A-24 13 839 ist ferner eine Schaltung für einen Fernsehempfänger beschrieben, der eine Einrichtung zur gleichzeitigen Wiedergabe mehrerer Programme enthält. Es wird dabei in einem Bildausschnitt des direkt empfangenen Hauptprogramms das mittels eines einzigen umschaltbaren Tuners empfangene Nebenprogramm mit verminderter Zeilenzahl zunächst in einem Speicher abgelegt und jeweils zeilenweise abgerufen, wenn der Elektronenstrahl der Bildröhre den vorgegebenen Bildausschnitt überstreicht. Der Nachteil dieses Verfahrens liegt in horizontalen gitterartigen Störungen des Hauptbildes, die sich durch die in regelmäßigem Abstand fehlenden Zeilen des Hauptbildes ergeben, wenn der Tuner während dieser Zeit auf das Nebenprogramm umgeschaltet ist, und die nur unvollständig kompensiert werden können.

Es ist daher Aufgabe der in den Ansprüchen gekennzeichneten Erfindung, eine Weiterbildung der eingangs genannten Schaltung anzugeben, um die gitterartigen Störungen, die sich bei der Wiedergabe des ebenfalls beschriebenen Verfahrens mit der Ein-Tuner-Umschaltung ergeben, zu beseitigen.

Ein Vorteil der Erfindung ergibt sich unmittelbar aus der Lösung der gestellten Aufgabe. Ein weiterer Vorteil besteht darin, daß für den Bildaufbau des gesamten Schirmbildes die gesamten Bilddaten aus dem RAM entnommen werden und damit gängige Techniken der Bildverbesserung erlauben. Durch schnelles Auslesen der Speicherzeilen ist der dargestellte Bildinhalt vom Zeilenflackern und Hintergrundflimmern befreit.

Ferner ist es durch unterschiedliche Veränderung der Abtastgeschwindigkeit der verschiedenen Videosignalquellen bis fast hin zum Standbild möglich sie einfach zu überwachen. Schließlich ist von Vorteil, daß durch die digitale Signalverarbeitung und digitale Speicherung die Videosignalquellen analoge oder digitale Signale liefern können, die beide leicht verarbeitbar sind.

Die Erfindung wird nun anhand der Figuren der Zeichnung näher erläutert.

Fig. 1 zeigt in Form eines Blockschaltbilds in vereinfachter Form ein Ausführungsbeispiel eines Fernsehempfängers mit Mehrfach-Bildwiedergabe nach der Erfindung,

Fig. 2 zeigt ein Ausführungsbeispiel für die Aufteilung des Bildschirms bei Mehrfach-Bildwiedergabe,

Fig. 3a zeigt das Abtastschema zweier Fernsehkanäle, die jeweils aus einer alternierenden Folge von gerad- und ungeradzahligen Halbbildern bestehen,

Fig. 3b zeigt schematisch die zu Fig.3a gehörende Aufteilung des RAMs, und

Fig. 4 zeigt in Form eines Blockschaltbilds eine Realisierung des RAMs mit Standardbausteinen.

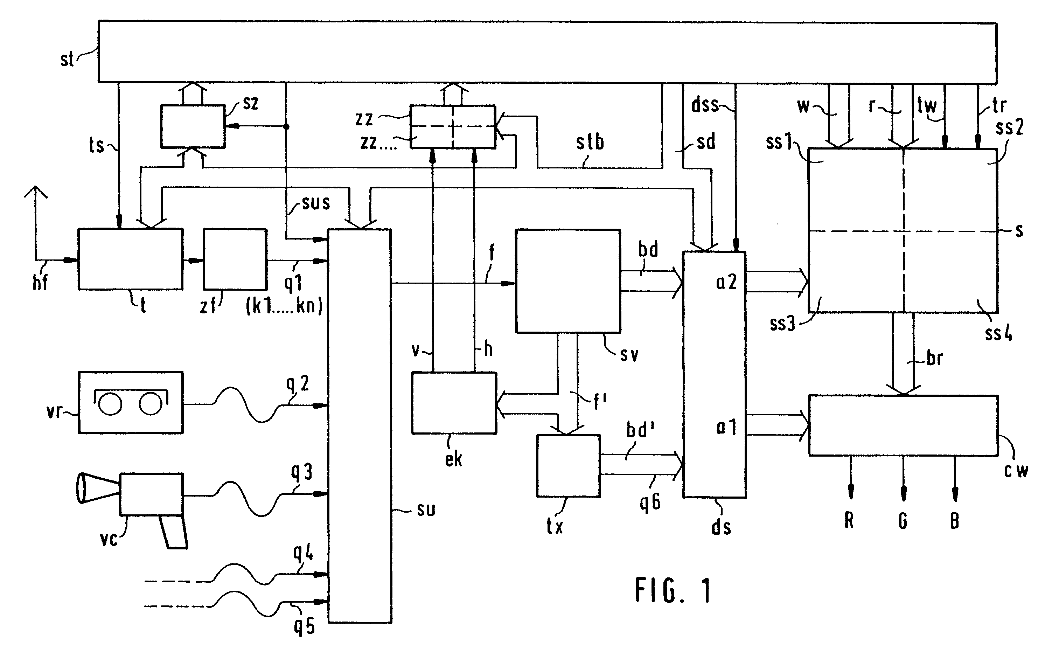

In dem vereinfachten Blockschaltbild eines Ausführungsbeispiels nach Fig. 1 sind als Videosignalquellen, die für die Mehrfach-Bildwiedergabe in Frage kommen, folgende Videosignalquellen erkennbar. q1: als Ausgangssignal des Zwischenfrequenzverstärkers zf das jeweilige Signal eines Fernsehkanals k1...kn, wobei der Zwischenfrequenzverstärker dem Hochfrequenzempfänger t, der einen einzigen Tuner enthält und von der Antenne her mit dem Antennensignal hf gespeist ist, nachgeschaltet ist; q2: der Videorecorder vr; q3: die Videokamera vc; q4, q5: zwei weitere nicht

2

näher bezeichnete Anschlüsse, an die z.B. ein Rechner oder ein Bildschirmtextgerät angeschlossen werden könnte; q6: das Ausgangssignal des Teletextdecoders tx. Die Videosignalquelle q1 kann durch entsprechende Tunerumschaltung abwechselnd verschiedene Fernsehkanäle k1, k2... liefern.

Die Videosignalquellen q1...q5 sind an die Eingangsbuchsen des analogen Signalumschalters su angeschlossen. Der Ausgang des Teletextdecoders tx ist intern mit einem Eingang des Datenumschalters ds verbunden. Der Signalumschalter su und der Datenumschalter ds werden über den Steuerbus stb, über den die von der Steuereinheit st erzeugten Steuerdaten sd laufen, umgeschaltet.

Die Auswahl der im Antennensignal hf enthaltenen verschiedenen Fernsehkanäle erfolgt im Hochfrequenzempfänger t, der einen in der Frequenz programmierbaren Tuner enthält. Die Steuerdaten sd über den jeweils auszuwählenden Fernsehkanal werden dem Tuner über den Steuerbus stb zugeführt,damit wird die Umschaltung des Tuners vorbereitet; die eigentliche und sehr schnelle Umschaltung des Tuners erfolgt durch das Tunerumschaltsignal ts, das von der Steuereinheit st erzeugt wird. Ein entsprechendes Umschaltsignal, das Schaltsignal sus, ist dem Signalumschalter zugeleitet, und ein weiteres Schaltsignal, das Digitalschaltsignal dss, steuert ebenso von der Steuereinheit aus die Umschaltung des Datenumschalters ds. Mit diesen zusätzlichen Umschaltsignalen ts, sus, dss ist die genaue und schnelle Umschaltung möglich.

Der Signalumschalter su speist mit seinem Ausgangssignal, welches das Farb-Bild-Austast-Synchron-Signalgemisch f ist, den Eingang der digitalen Signalverarbeitungsschaltung sv. Diese erzeugt einmal die Bilddaten bd, welche aus dem (R-Y)-Signal und (B-Y)-Signal bestehen (R = rot, B = blau, Y = Helligkeit). Die Bilddaten bd der digitalen Signalverarbeitungsschaltung sv und die Bilddaten bd' des Teletextdecoders tx speisen jeweils einen Eingang des Datenumschalters ds. Dieser hat zwei verschiedene Ausgänge a1, a2, die von der Steuereinheit st geschaltet sind. Im Normalbetrieb ohne Mehrfach-Bildwiedergabe sind die Ausgangssignale des Datenumschalters ds über den Ausgang a1 direkt dem Digital-Analog-Wandler cw zugeleitet, der ferner die R-G-B-Matrix enthält und als Ausgangssignale die analogen R-, G-, B-Signale erzeugt (G = grün), welche den Endverstärkern und dann den einzelnen Farbkathoden der Bildröhre zugeleitet sind. Bei Mehrfach-Bildwiedergabe-Betrieb wird der Digital-Analog-Wandler cw von den aus dem RAM s ausgelesenen Bilddaten br gespeist, wobei der RAM s so ausgebildet ist, daß er mindestens zeitweise gleichzeitig geladen und ausgelesen wird.

Der andere Ausgang a2 des Datenumschalters ds speist den RAM s, der in diesem Ausführungsbeispiel in die vier einzelnen Speichersektoren ss1, ss2, ss3 ss4 unterteilt ist. Die Unterteilung ist nur eine gedachte bzw. adressenbezogene Unterteilung und soll veranschaulichen, daß eine Vierfach-Bildwiedergabe vorgesehen ist. Das gleichzeitige Laden und Auslesen der Bilddaten bd, bd' in und aus dem RAM s ist von der Steuereinheit st durch die Zuführung von Ladeadressen w und Ausleseadressen r über eigene Adressenbusse gewährleistet. Die Steuereinheit st versorgt den RAM s außerdem mit dem Ladetakt tw und dem Lesetakt tr, die beide in der Frequenz voneinander abweichen können. Dies ist davon abhängig, ob bei der Mehrfach-Bildwiedergabe die Videosignalquellen verkleinert, ausschnittsweise in gleicher Bildgröße oder gar ausschnittsweise vergrößert dargestellt werden sollen. Ferner ist die jeweilige Taktfrequenz auch noch davon abhängig, ob bei der Mehrfach-Bildwiedergabe das Bild flimmerfrei sein soll, weil dann die einzelnen Fernsehzeilen mit erhöhter Geschwindigkeit des Elektronenstrahls auf dem Bildschirm geschrieben werden, was ebenfalls ein schnelles Auslesen der einzelnen Bildzeilen aus dem RAM s erforderlich macht.

Die digitale Signalverarbeitungsschaltung sv speist ferner mit einem weiteren Ausgangssignal, welches dem digitalen Farb-Bild-Austast-Synchron-Signalgemisch f' entspricht, den Teletext-Decoder tx und die Erkennungsschaltung ek. Diese trennt in der jeweiligen Empfangsperiode die vorhandenen Horizontalsynchronimpulse und falls vorhanden die Vertikalsynchronimpulse aus dem digitalen Farb-Bild-Austast-Synchron-Signalgemisch f' ab und speist mit einem Zeilenimpuls h den der jeweiligen Videosignalquelle q ... bzw. Fernsehkanal k... zugeordneten Zeilenzähler zz..., dessen Zählerinhalt der Steuereinheit st zugeführt ist. Die Zeilenzähler zz.... sind während der verschiedenen Empfangsperioden so weitergeschaltet, daß zu Beginn einer Empfangsperiode der entsprechende Zeilenzähler denjenigen Zählerstand aufweist, der der empfangenen Zeile gerade entspricht. Diese Weiterschaltung wird durch die Steuereinheit st gesteuert. Somit wird mit der jeweiligen Videosignalquelle q... bzw. Fernsehkanal k... ein Zeilensynchronismus erreicht, der unabhängig davon ist, ob die Videosignalquelle q... bzw. der Fernsehkanal k... gerade zum RAM s durchgeschaltet ist. Nur mit diesem genauen Synchronismus kann erreicht werden, daß trotz der Videosignalquellen- bzw. Fernsehkanalumschaltung die entsprechende Bildzeile an die richtige Stelle des RAM s geladen wird und daß der Anfang dieser Zeile auch in den Anfang der jeweiligen Speichersektor-Zeile gelangt. Eine Empfangsperiode fängt somit mit dem Beginn einer vollständigen Bildzeile an und umfaßt mindestens deren Dauer.

Enthält die jeweilige Empfangsperiode einen Vertikalsynchronimpuls, dann gibt die Erkennungsschaltung ek den Vertikalimpuls v an den Zeilenzähler zz..., der damit die Zählung der einzelnen Zeilen synchronisiert.

Der Steuereinheit st ist ferner der jeweilige Zählerstand des Signalquellenzählers sz zugeführt, der mit der Umschaltung der Videosignale jeweils entsprechend weitergeschaltet ist. Dabei ist der Signalquellenzähler sz eine Art von Ringzähler, dessen Anzahl von Zählerzuständen der Anzahl der wiederzugebenden Videosignale entsprcht.

Soll bei der Speicherung der Videosignale im zugehörigen Speichersektor ss... noch berücksichtigt werden, ob alternierend gerad- und ungeradzahlige Halbbilder, oder immer nur gleichartige Halbbilder in den jeweiligen Speichersektor ss... gelangen sollen, dann kann der Signalquellenzähler sz entsprechend ausgebildet sein, indem z.B. die Anzahl der Zählerzustände auf einen gerad-oder ungeradzahligen Wert ergänzt ist.

Bei der Mehrfach-Bildwiedergabe kann wie vorbeschrieben das Zeilenflattern oder das Hintergrundflimmern durch entsprechende Techniken verhindert werden. Eine ruckhafte Bewegung des Bildinhalts bei Videosignalen mit bewegtem Bildinhalt ist indessen grundsätzlich nicht zu verhindern. Diese Beeinträchtigung wird zwar durch die verkleinerte Wiedergabe der Videosignale jeweils in einem Teilbereich tb des Bildschirms sb vermindert. Indessen tritt der Effekt umso stärker auf, je mehr Videosignale zum Bildaufbau beisteuern. Es ist daher von Vorteil, wenn die mittleren Empfangsperioden der Videosignale nicht untereinander gleich, sondern individuell einstellbar sind. Damit kann eine weniger wichtige Videosignalquelle q3, die einer Kamera entstammt oder ein weniger wichtiger Fernsehkanal k... nur mit einer sehr geringen Folgefrequenz auf den Signalumschalter su geschaltet werden. Die so freibleibenden Empfangsperioden können einer anderen Videosignalquelle zugute kommen, die damit ein nahezu ruckfreies Bild liefern kann. Für diese spezielle Steuerung ist der Signalquellenzähler sz in Verbindung mit der Steuereinheit st erforderlich. Der Signalquellenzähler sz ist somit eingangsseitig mit dem Steuerbus stb verbunden und mit einem Umschaltsignal, hier mit dem Schaltsignal sus, gespeist, wobei sein Ausgangssignal der Steuereinheit st zugeführt ist.

Die jeweilige Dauer der einzelnen Empfangsperioden, die normalerweise innerhalb eines Umschaltzyklus etwa gleich lang und höchstens gleich der Dauer eines empfangenen Halbbildes sind, werden durch die individuelle Umschaltung verändert, so daß einzelne Empfangsperioden auftreten, die mehr als ein Halbbild umfassen können. Dafür werden dann Empfangsperioden für andere Videosignale kürzer, oder werden sogar ganz übersprungen.

Zwischen der digitalen Signalverarbeitungsschaltung sv und dem RAM s kann eine Filterschaltung vorgesehen werden, die eine Datenkompression der Bilddaten bd durchführt, wodurch die erforderliche Größe des RAM s reduziert werden kann.

Ein weiterer Vorteil derartiger Filterschaltungen ist eine horizontale und vertikale Interpolation der ausgewählten Bildzeilen des jeweiligen Videosignals, die eine verbesserte Bildwiedergabe im Teilbereich tb ermöglicht. Treten nämlich im jeweiligen Videosignal vertikale und horizontale Strukturen auf, so können diese Strukturen durch die Auswahl der im Speichersektor ss abgespeicherten Bildpunkte in den ausgelesenen Bilddaten br vorhanden oder nichtvorhanden sein, und so die Bildwiedergabe stören. Die Interpolation beseitigt diese Störung, die auch als Moiré auftreten kann.

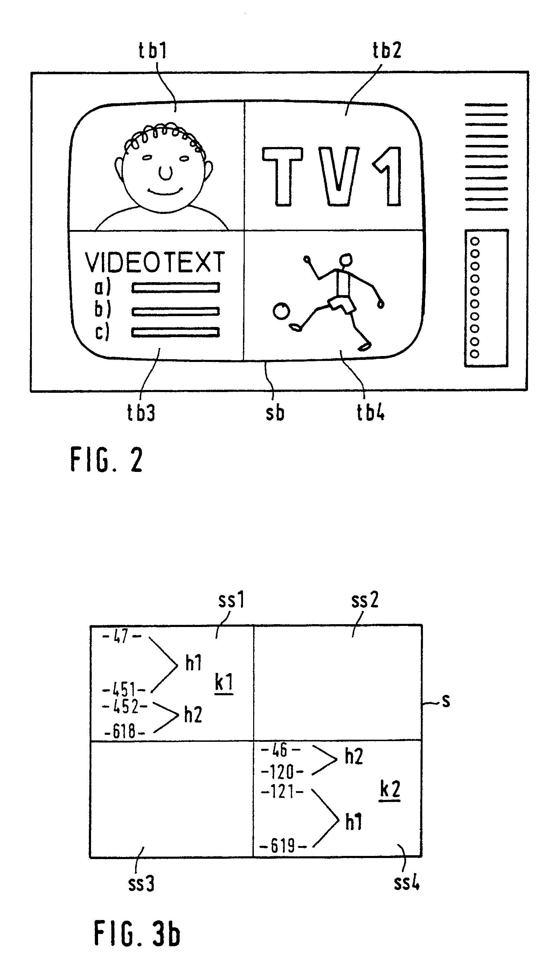

Fig. 2 zeigt eine typische Mehrfach-Bildwiedergabe auf dem Bildschirm sb eines Fernsehgerätes, das entsprechend dem Ausführungbeispiel von Fig. 1 in vier Teilbereiche tb1...tb4 aufgeteilt ist. Im ersten Teilbereich tb1 und im zweiten Teilbereich tb2 sind die Bilder zweier unterschiedlicher Fernsehkanäle k1, k2 zu sehen. Der dritte Teilbereich tb3 zeigt eine Videotextseite entsprechend der Videosignalquelle q6 , während im vierten Teilbereich tb4 die Aufzeichnung des Videorecorders vr zu sehen ist. In allen vier Teilbereichen sind die Abbildungen der verschiedenen Videosignalquellen verkleinert.

Bei der Darstellung im zweiten Teilbereich tb2 kann die Bildfolgefrequenz reduziert werden, denn damit soll nur prüfbar sein, wann ein bestimmter Programmteil, z.B. ein Film beginnt. Die Videotextseite im dritten Teilbereich tb3 kann als Standbild gespeichert sein; damit ist die Bildwechselfrequenz für den ersten und vierten Teilbereich tb1, tb4 vergrößert.

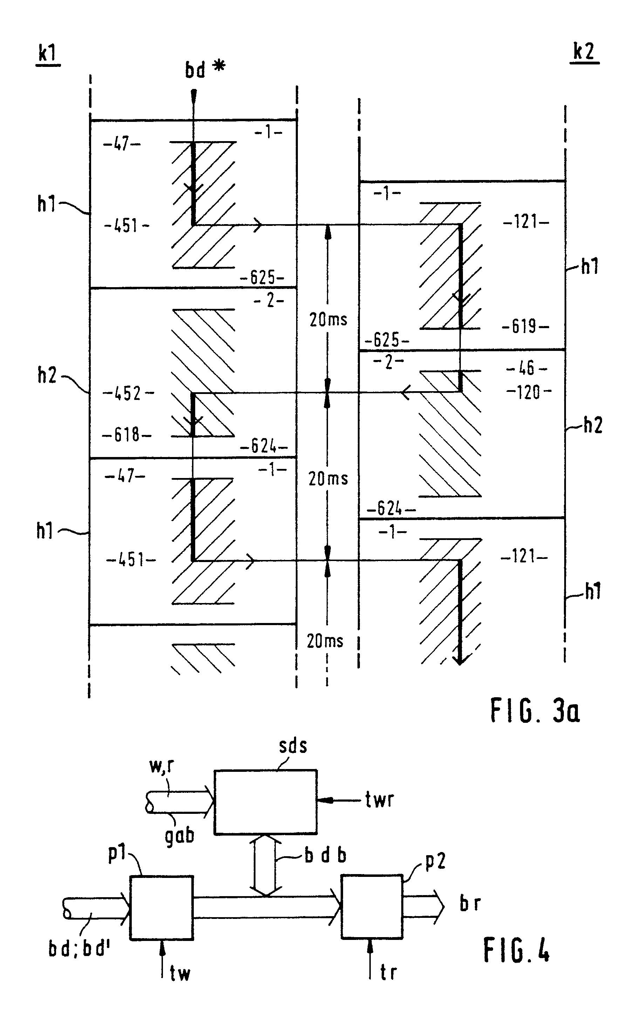

Fig. 3a zeigt ein Ausführungsbeispiel für das Abtastschema zweier Fernsehkanäle k1, k2 eines 625-Zeilen-Standards mit 25 Zeilen Dunkeltastung je Halbbild. Die jeweiligen Halbbilder h1, h2 sind übereinander dargestellt, wobei das ungeradzahlige Halbbild h1 die ungeradzahligen Zeilen und das geradzahlige Halbbild h2 die geradzahligen Zeilen enthält. Der schematische Verlauf der Abtastung der beiden Fernsehkanäle k1, k2 wird anhand der mäanderförmigen Linie bd*, die zwischen den beiden Fernsehkanälen k1, k2 verläuft gezeigt. Dabei ist für den ersten Fernsehkanal k1 der erste Speichersektor ss1 und für den zweiten Fernsehkanal k2 der vierte Speichersektor ss4 vorgesehen. Die Empfangsperiode beträgt jeweils 20 ms, worauf der empfangene Fernsehkanal auf den anderen umgeschaltet wird. Die Darstellung beginnt beim Fernsehkanal k1 im ungeradzahligen Halbbild h1 mit der Zeile 1 und speichert davon die Zeilen 47 bis 451 ab. Dann wird der Fernsehkanal k2 eingeschaltet, dessen Phasenlage so ist, daß gerade die 121. Zeile des ungeradzahligen Halbbildes h1 eingelesen werden kann. Dieses Halbbild h1 wird bis zur Zeile 619 inklusiv zu Ende abgespeichert. Während des Bildrücklaufs findet keine Speicherung statt. Vom geradzahligen Halbbild h2 werden dann noch die 46. bis 120. Zeile in den entsprechenden Speicherplätzen des vierten Speichersegments ss4 gespeichert. Die erneute Umschaltung auf den Fernsehkanal k1 findet im geradzahligen Halbbild h2 die Zeile 452 vor, worauf es bis zur Zeile 618 inklusiv noch zu Ende eingelesen wird. Während des Bildrücklaufs findet keine Speicherung statt. Das neue ungeradzahlige Halbbild h1 wird wieder mit der Zeile 47 eingelesen, und der Abtastvorgang läuft so entsprechend periodisch weiter.

Vereinfachend ist in Fig. 3a nur der Bereich zwischen den Zeilen 46, 47 und 618, 619 in den Speichervorgang einbezogen. Der notwendige Speicherbereich für die Videosignalquellen verringert sich somit um die Bildrücklauf-Zeilen ohne Bildinhalt.

In Fig. 3b ist dargestellt wie sich der Speichervorgang von Fig. 3a im RAM s schematisch abspielt. Der erste Speichersektor ss1 zeigt eine abgespeicherte Zeilenkombination aus dem ungeradzahligen und dem geradzahligen Halbbild h1, h2 des ersten Fernsehkanals k1. Im vierten Speichersektor ss4 sind dazu die korrespondierenden gespeicherten Zeilen des Fernsehkanals k2 gezeigt. Auch hier handelt es sich um eine Kombination aus dem ungeradzahligen und dem geradzahligen Halbbild h1, h2. Die Speichersektoren ss2, ss3 enthalten "alte" Bilddaten und sind an der vorher beschriebenen Videosignalumschaltung nicht beteiligt, können aber z.B. einen jeweils vorher aufgenommenen "Schnapp-Schuß" oder ein Standbild enthalten, das dann bei der Mehrfach-Bildwiedergabe dargestellt wird.

Das Abtastschema nach Fig. 3a und der zugehörige Speicherinhalt von Fig. 3b zeigen zudem, daß die Größe und die Anordnung der verschiedenen Bildteile, die in den einzelnen Speichersektoren ss... abgelegt sind, sich innerhalb einiger Mehrfach-Bildwiedergabeperioden allenfalls nur geringfügig ändern. Diese ergibt sich, wenn die Phasen der beteiligten Videosignale aneinander vorbeidriften, so daß sich die Phasenlage der Halbbilder h1; h2 der Videosignale gegeneinander allmählich ändert.

Im Gegensatz zu der in der Offenlegungsschrift DE-A-24 13 839 beschriebenen Schaltung werden alle wiederzugebenden Videosignale zuerst in einem Speichersektor ss... gespeichert und danach für die Wiedergabe ausgelesen. Es findet keine Unterscheidung zwischen Haupt- und Nebenprogramm statt. Die jeweilige Bildwiedergabe in den Teilbereichen tb... entspricht den aus den jeweiligen Speichersektoren ss... ausgelesenen Bilddaten br. Der Umschalt- und der Speichervorgang ist dadurch zeitlich sehr variabel geworden, denn die Dauer der Empfangsperioden ist in einem weiten Bereich veränderbar - von der Dauer einer Zeile bis hin zur Dauer eines Halbbildes - ohne daß dies auf dem Bildschirm ein überlagertes Störmuster durch fehlende Zeilen oder durch fehlende Zeilenblöcke zur Folge hat. Je mehr Videosignale wiederzugeben sind, desto deutlicher erweist sich die Verbesserung gegenüber dem Verfahren der genannten Offenlegungsschrift, bie der die Zahl der fehlenden Zeilen im Hauptbild bei mehreren Nebenbildern entsprechend untragbar zunehmen würde. Daher ist das Verfahren dort in der Praxis allenfalls auf ein einziges Nebenbild anwendbar.

Bei dem in Fig. 1 gezeigten RAM s handelt es sich um die schematische Darstellung eines "Dual-Port-RAMs" mit völlig getrenntem Lese- und Speicherzyklus, in dem je ein Datenbus für die zu speichernden Bilddaten bd; bd' bzw. für die ausgelesenen Bilddaten br und je ein Datenbus für die Ladeadressen w bzw. Ausleseadressen r, sowie je ein getrennter Eingang für den Ladetakt tw bzw. den Lesetakt tr vorgesehen ist.

Die direkte Realisierung dieser Anordnung ist mit den derzeit erhältlichen RAMs, insbesondere mit den derzeitigen standardisierten und daher preisgünstigeren dynamischen RAMs (dynamisches RAM = DRAM) nicht möglich, weil die vorbeschriebene Funktionstrennung nicht vorhanden ist.

Mit dem recht speziellen "Dual-Port-DRAM", MB 81461-12 ist die Funktionstrennung in leicht abgeänderter Form möglich, denn dieser erhältliche Speicherbaustein enthält zwar einen nichtgetrennten Adressbus, sonst aber alle anderen getrennten Funktionseinheiten. Ferner erlaubt dieser "Dual-Port-DRAM" ein schnelles Umladen vom gespeicherten Datenblöcken aus dem eigentlichen Speicherbereich in einen mitintegrierten Pufferspeicher. Aus diesem werden dann die gespeicherten Bilddaten br für die Mehrfachbild-Wiedergabe streng sequentiell ausgelesen so daß der gemeinsame Adressbus für den Ladevorgang während dieser Zeit frei ist.

In Fig. 4 ist eine etwas aufwendigere Realisierung mit zwei sogenannten "First-In-First-Out"-Pufferspeichern p1, p2 ( = FIFO-Pufferspeicher) gezeigt, die dann aber auch die Verwendung von standardisierten DRAMs sds mit einem gemeinsamen Adressbus gab und einem gemeinsamen Datenbus bdb erlaubt. Derartige FIFO-Pufferspeicher p1, p2 (als handelsüblicher Typ z.B.: TDC 1030) wandeln den bidirektionalen Datenbus bdb funktionsmäßig in je einen entkoppelten Datenbus für zeitgleiches Laden und Auslesen von Daten um.

Der Ausgang des ersten FIFO-Pufferspeichers p1 und der Eingang des zweiten FIFO-Pufferspeichers p2 ist an den bidirektionalen Datenbus bdb des DRAMs sds angeschlossen. Dem ersten FIFO-Pufferspeicher p1 ist als Ladetaktsignal der Ladetakt tw und dem zweiten FIFO-Pufferspeicher p2 ist als Auslesetaktsignal der Lesetakt tr zugeführt. Das Einlesen der zu speichernden Bilddaten bd, bd' in den ersten FIFO-Pufferspeicher p1 und das Auslesen der gespeicherten Bilddaten br aus dem zweiten FIFO-Pufferspeicher p2 ist somit voneinander entkoppelt.

Das schnelle blockweise Umladen der im ersten FIFO-Pufferspeicher p1 gespeicherten Daten in den DRAM sds erfolgt über den bidirektionalen Datenbus bdb, wobei die Ladeadressen w als Blockadressen über den Adressbus des DRAMs sds eingegeben sind und stellt somit den eigentlichen Ladevorgang des DRAMs sds dar. Als Taktsignal ist dem DRAM sds der Lade-Lesetakt twr zugeführt.

Das eigenliche Auslesen aus dem DRAM sds erfolgt entsprechend in schnell über den bidirektionalen Datenbus bdb ausgelesenen Datenblöcken, die in dem zweiten FIFO-Pufferspeicher p2 zwischengespeichert werden, wobei die Ausleseadressen r als Blockadressen über den Adressbus des DRAMs sds eingegeben sind und als Taktsignal der dem DRAM sds zugeführte Lade-Lesetakt twr dient. Für die Mehrfach-Bildwiedergabe erfolgt dann die Auslesung der gespeicherten Bilddaten br aus dem zweiten FIFO-Pufferspeicher p2 streng sequentiell für die darzustellenden Bildzeilen.

## Ansprüche

1. Fernsehempfänger mit Mehrfachbild-Wiedergabe, auf dessen Bildschirm (sb) ein einziges Videosignal gleichzeitig in mehreren Teilbereichen (tbl...tbn) oder mehrere unterschiedliche Videosignale jeweils in einem zugeordneten Teilbereich (tb...) wiederzugeben sind, wobei jeweils in einem Teilbereich (tb...) als Videosignal entweder ein verkleinertes Bild oder ein Ausschnitt des von einer Videosignalquelle (q1...q6) gelieferten Bildes darzustellen ist, und sich unter den Videosignalen mindestens ein empfangenes Fernsehkanal-Videosignal befindet,

    - mit einer digitalen Signalverarbeitungsschaltung (sv), die die Signale der Videosignalquellen (q...) in Bilddaten (bd) umwandelt, die für jeden Bildpunkt aus Helligkeitsund Farbdaten bestehen,

    - mit einem Random-Access-Speicher (= RAM) (s), der die Bilddaten (bd) des ganzen Bildschirms (sb) enthält,

    - mit einer Steuereinheit (st), die das Laden der Bilddaten (bd, bd') in einen Speichersektor (ss1...sn) des RAMs (s) in Abhängigkeit von der Anzahl der wiederzugebenden Videosignale und das zeilenweise Auslesen steuert, wobei jeweils nur ausgewählte Bildzeilen der Videosignalqellen (q...) in den zugeordneten Speichersektor (ss...) gelangen, und

    - mit einem die analogen Rot-, Grün- und Blau-Signale (R,G, B) erzeugenden Digital-Analog-Wandler (cw), dem die ausgelesenen Bilddaten (br) zugeführt sind, <u>gekennzeichnet durch folgende Merkmale:</u>

    - der RAM (s) ist so ausgebildet, daß er mindestens zeitweise gleichzeitig geladen und ausgelesen wird (Dual-Port-RAM),

    - bei der Wiedergabe mindestens zweier Videosignale, werden diese von der Steuereinheit (st) für die Dauer einer Empfangsperiode umgeschaltet, die mit dem Beginn einer vollständigen Bildzeile beginnt und mindestens gleich deren Dauer und wenn alle Empfangsperioden eines Umschaltzyklus etwa gleich lang sind, höchstens gleich der Dauer eines empfangenen Halbbildes ist,

    - eine Erkennungsschaltung (ek), die in der jeweiligen Empfangsperiode die Horizontalbzw. Vertikalsynchronimpulse aus den Videosignalen abtrennt, daraus einen Zeilenimpuls (h) erzeugt und diesen einer Zeilenzähleinrichtung zuführt, wobei jeweils ein Zeilenzähler (zz) einer entsprechenden Videosignalquelle bzw. einem entsprechenden Fernsehkanal zugeordnet ist und die jeweiligen Zählerinhalte der Zeilenzähler (zz) der Steuereinheit (st) zugeführt sind,

    - die Zeilenzähler (zz) sind zwischen den verschiedenen Empfangsperioden so weitergeschaltet, daß sie zu Beginn einer Empfangsperiode denjenigen Zählerstand aufweisen, der der empfangenen Zeile gerade entspricht, und

    - der jeweilige Zählerstand eines Signalquellenzählers (sz) steuert die periodische Umschaltung der Videosignalquellen (q...) bzw. deren Fernsehkanäle (k...), eines Videosignals.

2. Fernsehempfänger nach Anspruch 1, dadurch gekennzeichnet, daß bei der Mehrfach-Bildwiedergabe mindestens zweier Fernsehkanäle (k1...kn), die als Videosignale einer einzigen Videosignalquelle (q...) entstammen und die mit nur einem einzigen Hochfrequenzempfänger (t) empfangen sind, dieser auf den jeweiligen Frequenzbereich eines Fernsehkanals (k...) von der Steuereinheit (st) für die Dauer einer Empfangsperiode umgeschaltet ist, die mit dem Beginn einer vollständigen Bildzeile beginnt, dabei mindestens deren Dauer umfaßt und wenn alle Empfangsperioden eines Umschaltzyklus etwa gleich lang sind, höchstens gleich der Dauer eines empfangenen Halbbildes ist.

3. Fernsehempfänger nach Anspruch 1 oder 2, dadurch gekennzeichnet, daß das in einem Speichersektor (ss...) gespeicherte Halbbild aus Bildteilen zusammengesetzt ist, die empfangsseitig ungerad- und geradzahligen Halbbildern (h1;h2) entstammen, wobei die Größe und die Anordnung der verschiedenen Bildteile sich innerhalb einiger Mehrfachbild-Wiedergabeperioden allenfalls nur geringfügig ändert.

4. Fernsehmpfänger nach einem der Ansprüche 1 bis 3, dadurch gekennzeichnet, daß die Videosignalumschaltung mindestens ein in einem Teilbereich (tb...) dargestelltes Videosignal überspringt und dort bei der Wiedergabe ein Standbild zeigt.

5. Fernsehempfänger nach einem der Ansprüche 1 bis 4, dadurch gekennzeichnet, daß die Umschaltfrequenz der Videosignalumschaltung mindestens eines Teilbereiches (tb...) im Sinne einer niedrigeren Bildfrequenz des Bildinhalts einstellbar ist.

6. Fernsehempfänger nach einem der .Ansprüche 1 bis 5, gekennzeichnet durch folgende Merkmale:

- als RAM (s) dient eine Schaltungsanordnung, die mindestens einen dynamischen Random-Access-Speicher (=DRAM) (sds) mit einem gemeinsamen bidirektionalen Daten- (bdb) und einem gemeinsamen Adressbus (gab) und mindestens einen ersten und einen zweiten "First-In-First-Out"-Pufferspeicher (=FIFO-Pufferspeicher) (p1, p2) enthält,

- der bidirektionale Datenbus (bdb) ist mit dem Datenausgang des ersten FIFO-Pufferspeichers (p1) und mit dem Dateneingang des zweiten FIFO-Pufferspeichers (p2) verbunden,

- dem Dateneingang des ersten FIFO-Pufferspeichers (p1) sind die Bilddaten (bd; bd') und seinem Takteingang der Ladetakt (tw) zugeführt,

- der Ausgang des zweiten FIFO-Pufferspeichers (p2) liefert die ausgelesenen Bilddaten (br), wobei als Auslesetakt der Lesetakt (tr) zugeführt ist, und

- der Datenfluß beim Lade- und Auslesevorgang des DRAMs (sds) erfolgt blockweise über seinen bidirektionalen Datenbus (bdb), wobei die jeweiligen Ladeadressen (w) und Ausleseadressen (r) über einen gemeinsamen Adressbus (gab) zugeführt sind und ein Lade-Lesetakt (twr) den DRAM (sds) speist.

**Claims**

1. Television receiver with multipicture display on whose screen (sb) a single video signal can be reproduced simultaneously in two or more subareas (tb1...tbn), or two or more different video signals in one associated subarea (tb..) each, with each of the subareas (tb...) displaying either a reduced-size picture or a part of the picture supplied by a video-signal source (q1...q6), and the video signals including at least one received television channel video signal,

- with a digital signal-processing circuit (sv) which converts the signals from the video-signal sources (q...) to picture data (bd) consisting of luminance and color data for each picture element,

- with a random-access memory (=RAM) (s) which holds the picture data (bd) of the entire screen (sb),

- with a control unit (st) which controls the writing of the picture data (bd, bd') into an area (ss1...sn) of the RAM (s) depending on the number of video signals to be reproduced and the line-by-line readout, with only selected lines being transferred from the video-signal sources (q...) into the associated memory area (ss...), and

- with a digital-to-analog converter (cw) which is furnished with the picture data (br) read from the RAM and delivers the analog red, green, and blue signals (R, G, B),

characterized by the following features:

- The RAM (s) is designed to be written into and read from simultaneously, at least temporarily (dual-port RAM);

- during the display of at least two video signals, the latter are switched by the control unit (st) for the duration of one receive period which starts with the beginning of a complete scanning line and is at least equal to one line period and, if all receive periods of a switching cycle are about equally long, does not exceed the duration of a received field;

- a recognition circuit (ek) which separates the horizontal synchronizing pulses and vertical synchronizing pulses from the video signals in the respective receive period, derives a line pulse (h) therefrom, and feeds it to a line-counting device containing line counters (zz) which are associated with one video-signal source or one television channel each, and whose contents are fed to the control unit (st);

- the line counters (zz) are so advanced between the different receive periods that at the beginning of a receive period, their count corresponds to the line being received, and

- the respective count of a signal-source counter (sz) controls the periodic switching of the video-signal sources (q...), or the television channels (k...), of a video signal.

2. A television receiver as claimed in claim 1, characterized in that, during the multipicture display of at least two television channels (k1...kn) originating as video signals from a single video-signal source (q...) and received with only a single radio-frequency receiver (t), the latter is switched by the control unit (st) to the respective frequency range of a television channel (k...) for the duration of one receive period which starts with the beginning of a complete scanning line, lasts at least one line period, and, if all receive periods of a switching cycle are approximately equally long, does not exceed the duration of a received field.

3. A television receiver as claimed in claim 1 or 2, characterized in that the field stored in a memory area (ss...) is composed of parts originating at the receiving end from odd- and even-numbered fields (h1; h2), with the size and the arrangement of the various parts of the field changing within a few multipicture display periods only slightly if at all.

4. A television receiver as claimed in any one of claims 1 to 3, characterized in that the video-signal switching skips at least one video signal displayed in a subarea (tb...) of the screen (sb) and displays a still picture there.

5. A television receiver as claimed in any one of claims 1 to 4, characterized in that the frequency of the video-signal switching of at least one subarea (tb...) is adjustable to obtain a lower frame frequency.

6. A television receiver as claimed in any one of claims 1 to 5, characterized by the following features:
   - The RAM (s) is formed by a circuit arrangement containing at least one dynamic random-access memory (= DRAM) (sds) having a common bidirectional data bus (bdb) and a common address bus (gab), and at least one first "first-in first-out" buffer (= FIFO buffer) (p1) and one second FIFO buffer (p2);
   - the bidirectional data bus (bdb) is connected to the data output of the first FIFO buffer (p1) and to the data input of the second FIFO buffer (p2);
   - the data input of the first FIFO buffer (p1) is supplied with the picture data (bd; bd'), and the clock input with the write signal (tw);
   - the output of the second FIFO buffer (p2) delivers the picture data (br) read out under control of the read signal (tr), and
   - during the writing into and reading from the DRAM (sds), data is transferred block by block over its bidirectional data bus (bdb), the respective write addresses (w) and read addresses (r) being applied over a common address bus (gab), and a read/write signal (twr) being supplied to the DRAM (sds).

**Revendications**

1. Récepteur de télévision à reproduction d'images multiples, sur l'écran (sb) duquel un signal vidéo unique doit être reproduit simultanément sous la forme de plusieurs zones partielles (tb1...tbn), où plusieurs signaux vidéo différents doivent être reproduits respectivement sous la forme d'une zone partielle associée (tb...), auquel cas soit une image réduite, soit une partie de l'image délivrée par une source de signaux vidéo (q1...q6) doit être reproduite, en tant que signal vidéo, respectivement dans une zone partielle (tb...), et au moins un signal vidéo reçu du canal de télévision fait partie des signaux vidéo, et comportant

   - un circuit numérique (sv) de traitement des signaux, qui convertit les signaux des sources de signaux vidéo (q...) en des données d'images (bd) constituées, pour chaque point d'image, par des données de luminosité et des données de couleurs,
   - une mémoire à accès direct (= RAM) (s), qui contient les données d'image (bd) de l'ensemble de l'écran (sb),
   - une unité de commande (st), qui commande le chargement des données d'images (bd, bd') dans un secteur (ss1...sn) de la mémoire RAM (s) en fonction du nombre des signaux vidéo devant être reproduits, et la lecture ligne par ligne, auquel cas respectivement seules des lignes d'image sélectionnées des sources de signaux vidéo (q...) parviennent dans le secteur associé (ss...) de la mémoire, et
   - un convertisseur numérique-analogique (cw), qui produit les signaux analogiques rouge, vert et bleu (R,G,B) et auquel sont envoyées les données d'image lues (br), caractérisé par les caractéristiques suivantes :
   - la mémoire RAM (s) est agencée de manière à être chargée et lue simultanément au moins par instants (RAM à double accès),

- lors de la reproduction d'au moins deux signaux vidéo, ces derniers sont commutés par l'unité de commande (st) pendant la durée d'une période de réception, qui commence par le début d'une ligne d'image complète et possède au moins la durée de cette ligne, et, lorsque toutes les périodes de réception d'un cycle de commutation possèdent approximativement la même durée, possède une durée égale au maximum à la durée d'une trame reçue,

- un circuit d'identification (ek), qui, pendant la période respective de réception, sépare les impulsions de synchronisation horizontale ou verticale, des signaux vidéo, produit à partir de là une impulsion de ligne (h) et envoie cette dernière à un dispositif de comptage de lignes, auquel cas respectivement un compteur de lignes (zz) est associé à une source correspondante de signaux vidéo ou à un canal de télévision correspondant et les contenus respectifs des compteurs de lignes (zz) sont envoyés à l'unité de commande (st),

- le comptage des compteurs de lignes (zz) progresse entre les différentes périodes de réception de telle sorte que ces compteurs possèdent, au début d'une période de réception, l'état de comptage qui correspond précisément à la ligne reçue, et

- l'état respectif de comptage d'un compteur (s3) de sources de signaux commande la commutation périodique des sources de signaux vidéo (q...) ou leurs canaux de télévision (k...), d'un signal vidéo.

2. Récepteur de télévision selon la revendication 1, caractérisé en ce que dans le cas de la reproduction d'images multiples d'au moins deux canaux de télévision (k1...kn), qui sont délivrés en tant que signaux vidéo par une source unique de signaux vidéo (q...) et sont reçus uniquement par un seul récepteur à haute fréquence (t), ce dernier est commuté sur la plage respective de fréquences d'un canal de télévision (k...) par l'unité de commande (st), et ce pendant la durée d'une période de réception qui commence avec le début d'une ligne d'image complète, possède au moins la durée de cette ligne et, lorsque toutes les périodes des récepteurs d'un cycle de commutation possèdent des durées approximativement identiques, est égale au maximum à la durée d'une trame reçue.

3. Récepteur de télévision selon la revendication 1 ou 2, caractérisé par le fait que la trame mémorisée dans un secteur (ss...) de la mémoire est formée par la réunion de parties de l'image, qui proviennent, côté réception, de trames impaires et paires (h1;h2), la taille et l'amplitude des différentes parties de l'image variant en général seulement faiblement pendant quelques périodes de reproduction d'images multiples.

4. Récepteur de télévision selon l'une des revendications 1 à 3, caractérisé en ce que la commutation des signaux vidéo saute au moins un signal vidéo représenté dans une zone partielle (tb...) et y représente une image fixe lors de la reproduction.

5. Récepteur de télévision suivant l'une des revendications 1 à 4, caractérisé par le fait que la fréquence de commutation du signal vidéo d'au moins une zone partielle (tb...) est réglable au sens d'une réduction de la fréquence d'images du contenu en images.

6. Récepteur de télévision suivant l'une des revendications 1 à 5, caractérisé par les caractéristiques suivantes :

- comme mémoire RAM (s) on utilise un montage qui contient au moins une mémoire dynamique à accès direct (=DRAM) (sds) comportant un bus bidirectionnel commun de transmission de données (bdb) et un bus commun de transmission d'adresses (gab) et au moins des première et seconde mémoires tampons (premier entré-premier sorti) (= mémoires tampons FIFO) (p1, p2),

- le bus bidirectionnel de transmission de données (bdb) est relié à la sortie de données de la première mémoire tampon FIFO (pl) et à l'entrée de données de la seconde mémoire tampon FIFO (p2),

- les données d'images (bd; bd') sont envoyées à l'entrée de données de la première mémoire tampon FIFO (p) et la cadence de chargement (tw) est envoyée à l'entrée de cadence de cette mémoire,

- la sortie de la seconde mémoire tampon FIFO (p2) délivre les données d'image (br) extraites par lecture, la cadence de lecture (tr) étant envoyée en tant que cadence d'extraction, et

- le flux de données lors de l'opération de chargement et de l'opération de lecture de la mémoire DRAM (sds) s'effectue par blocs au moyen du bus bidirectionnel de transmission de données (bdb) de cette mémoire, les adresses respectives de chargement (w) et les adresses d'extraction (r) étant envoyées par l'intermédiaire d'un bus commun de transmission d'adresses (gab), tandis qu'une cadence de chargement-lecture (twr) alimente la mémoire DRAM (sds).

FIG. 1

FIG. 2

FIG. 3b

FIG. 3a

FIG.4